# FASCICULE DE BREVET EUROPEEN

(11) **EP 2 583 347 B1**
(45) Date de publication et mention de la délivrance du brevet: **22.10.2014**
(21) Numéro de dépôt: 11725454.0
(22) Date de dépôt: 15.06.2011
(51) Int. Cl.: H01M 10/05, H01M 10/052, H01M 4/505, H01M 4/525, H01M 4/48, H01M 4/485, H01M 4/58, H01M 10/04, H01M 10/0568

(54) **ACCUMULATEUR ELECTROCHIMIQUE AU LITHIUM A ARCHITECTURE BIPOLAIRE FONCTIONNANT SUR LA BASE D'UN COUPLE D'ELECTRODES LITHIUM-SOUFRE**
MIT EINEM ELEKTRODENPAAR AUS EINER LITHIUM-SCHWEFEL-VERBINDUNG BETRIEBENER, ELEKTROCHEMISCHER LITHIUMAKKUMULATOR MIT EINER BIPOLAREN ARCHITEKTUR
LITHIUM ELECTROCHEMICAL ACCUMULATOR HAVING A BIPOLAR ARCHITECTURE AND OPERATING WITH A LITHIUM-SULPHUR COMPOUND ELECTRODE PAIR

(30) Priorité: 17.06.2010 FR 1054819
(43) Date de publication de la demande: 24.04.2013
(73) Titulaire: Commissariat à l'Énergie Atomique et aux Énergies Alternatives, 75015 Paris (FR)
(72) Inventeur: BARCHASZ, Céline, F-38100 Grenoble (FR); CHAMI, Marianne, F-38600 Fontaine (FR); PATOUX, Sébastien, F-38600 Fontaine (FR)
(74) Mandataire: Ilgart, Jean-Christophe
(86) Numéro de dépôt international: PCT/EP2011/059949
(87) Numéro de publication internationale: WO 2011/157755

(56) Documents cités:
- US-A1- 2005 053 842

## Description

### DOMAINE TECHNIQUE

La présente invention a trait à un accumulateur électrochimique au lithium à architecture dite bipolaire spécifique comprenant, dans chaque cellule électrochimique un couple d'électrodes spécifiques permettant, outre le fait de délivrer une tension, de conférer audit accumulateur une forte capacité massique.

Le domaine de l'invention peut ainsi être défini comme celui des dispositifs de stockage d'énergie, en particulier celui des accumulateurs électrochimiques.

### ÉTAT DE LA TECHNIQUE ANTÉRIEURE

Les dispositifs de stockage d'énergie sont classiquement des accumulateurs électrochimiques fonctionnant sur le principe de cellules électrochimiques aptes à délivrer un courant électrique grâce à la présence dans chacune d'entre elles d'un couple d'électrodes (respectivement, une électrode positive et une électrode négative) séparé par un électrolyte, les électrodes comprenant des matériaux spécifiques aptes à réagir selon une réaction d'oxydoréduction, moyennant quoi il y a production d'électrons à l'origine du courant électrique et productions d'ions qui vont circuler d'une électrode à l'autre par le biais d'un électrolyte.

Les accumulateurs les plus usités souscrivant à ce principe sont les suivants :
*les accumulateurs Ni-MH utilisant de l'hydrure métallique et de l'oxyhydroxyde de nickel comme matériaux d'électrode ;
*les accumulateurs Ni-Cd utilisant du cadmium et de l'oxyhydroxyde de nickel comme matériaux d'électrode ;
*les accumulateurs Acide-Plomb utilisant du plomb et de l'oxyde de plomb PbO₂ comme matériaux d'électrode ;
*les accumulateurs Li-ion utilisant classiquement, en tout ou partie, des matériaux lithiés comme matériaux d'électrode.

Depuis quelques années, les accumulateurs Li-ion ont détrôné largement les autres accumulateurs mentionnés ci-dessus du fait de l'amélioration continue des performances des accumulateurs Li-ion en terme de densité d'énergie. En effet, les accumulateurs lithium-ion permettent d'obtenir des densités d'énergie massique et volumique (pouvant être supérieures à 180 Wh.kg⁻¹) nettement supérieures à celles des accumulateurs Ni-MH et Ni-Cd (pouvant aller de 50 et 100 Wh.kg⁻¹) et Acide-plomb (pouvant aller de 30 à 35 Wh.kg⁻¹). Qui plus est, les accumulateurs Li-ion peuvent présenter une tension nominale de cellule supérieure à celle des autres accumulateurs (par exemple, une tension nominale de l'ordre de 3,6 V pour une cellule mettant en oeuvre comme matériaux d'électrode le couple LiCoO₂/graphite contre une tension nominale de l'ordre de 1,5 V pour les autres accumulateurs susmentionnés).

De par leurs propriétés intrinsèques, les accumulateurs Li-ion s'avèrent donc particulièrement intéressants pour les domaines où l'autonomie est un critère primordial, tel que cela est le cas des domaines de l'informatique, de la vidéo, de la téléphonie, des transports tels que les véhicules électriques, les véhicules hybrides, ou encore des domaines médicaux, spatiaux, de la microélectronique.

D'un point de vue fonctionnel, les accumulateurs Lithium-ion fonctionnent sur le principe de l'intercalation-désintercalation du lithium au sein des matériaux constitutifs des électrodes des cellules électrochimiques de l'accumulateur.

Plus précisément, la réaction à l'origine de la production de courant (c'est-à-dire lorsque l'accumulateur est en mode de décharge) met en jeu le transfert, par l'intermédiaire d'un électrolyte conducteur d'ions lithium, de cations lithium provenant d'une électrode négative qui viennent s'intercaler dans le réseau accepteur de l'électrode positive, tandis que des électrons issus de la réaction à l'électrode négative vont alimenter le circuit extérieur auquel sont reliées les électrode positive et négative.

Les premiers accumulateurs au lithium comportaient du métal lithium au niveau de leurs électrodes négatives, ce qui fournissait une tension nominale de cellule élevée et d'excellentes densités d'énergie massique et volumique, avec toutefois le risque de formation de dendrites de lithium après répétition d'un certain nombre de cyclage, ces dendrites pouvant être à l'origine de la détérioration d'éléments constitutifs des cellules électrochimiques pouvant occasionner des phénomènes de court-circuit.

Pour palier ces inconvénients, il a été proposé, comme alternative au lithium métal des accumulateurs comprenant une cellule électrochimique comportant le couple d'électrodes suivant :
- une électrode négative à base d'un matériau carboné, tel que du graphite ;
- une électrode positive à base d'oxyde de métal de transition lithié de type LiMO₂, où M désigne Co, Ni, Mn.

Toutefois, du fait de l'utilisation du graphite pour la constitution de l'électrode négative, de tels accumulateurs ne présentent pas un comportement optimal en puissance.

Pour palier cet inconvénient, il a été proposé de remplacer le graphite par un matériau lithié, en particulier, par de l'oxyde de titane lithié Li₄Ti₅O₁₂. Cela entraîne cependant une diminution de la tension nominale de cellule (cette dernière passant de 3,6 V à 2,5 V), entraînant, par conséquent, une diminution de la densité d'énergie de l'accumulateur monocellule.

Afin de réaliser un accumulateur avec ce type de matériau d'électrode négative tout en conservant une densité d'énergie comparable à celle des accumulateurs utilisant du graphite, l'idée est de réaliser un accumulateur comprenant une pluralité de cellules électrochimiques montées en série, afin d'augmenter la tension globale de l'accumulateur, tout en cherchant à limiter la masse et le volume de celui-ci.

Une architecture appropriée pour mettre en série des cellules électrochimiques, sans nuire à la masse et au volume de l'accumulateur résultant, est l'architecture dite « bipolaire », consistant à empiler plusieurs cellules électrochimiques séparées l'une de l'autre par un substrat collecteur de courant, une face de ce substrat étant occupée par une électrode d'une cellule tandis que la face opposée de ce substrat est occupée par une électrode de signe opposé d'une cellule adjacente. Ce type d'architecture permet de réduire la résistance électrique de l'ensemble par rapport à un accumulateur, qui serait composé d'une pluralité de cellules reliées entre elles par des connecteurs extérieurs.

Cette architecture bipolaire permet également de limiter les masses et volumes inutiles.

Sur la base de cette architecture, les auteurs de la présente invention se sont proposé de mettre en place un nouveau type d'accumulateur au lithium qui ne présenterait pas de risque de dégradation des éléments constitutifs de l'accumulateur par formation de dendrite de lithium métallique et, qui plus est, présenterait une forte capacité massique.

### EXPOSÉ DE L'INVENTION

Les auteurs de la présente invention ont découvert, ainsi, de façon surprenante, qu'en utilisant un couple spécifique d'électrodes, il devient possible d'obtenir un accumulateur présentant les avantages susmentionnés.

Un tel accumulateur correspond à un accumulateur électrochimique au lithium comprenant au moins une première cellule électrochimique et au moins une deuxième cellule électrochimique séparées l'une de l'autre par un substrat collecteur de courant, lequel substrat supporte sur une première face une électrode de ladite première cellule électrochimique et sur une deuxième face opposée à ladite première face une électrode de signe opposé de ladite deuxième cellule électrochimique, chaque cellule comprenant une électrode positive et une électrode négative séparées par un électrolyte, caractérisé en ce que l'électrode positive comprend un composé lithié et l'électrode négative comprend du soufre élémentaire.

Avant d'entrer plus en détail dans l'exposé de cette invention, nous précisons les définitions suivantes.

Par électrode positive, on entend, classiquement, dans ce qui précède et ce qui suit, l'électrode qui fait office de cathode, quand l'accumulateur débite du courant (c'est-à-dire lorsqu'il est en processus de décharge) et qui fait office d'anode lorsque l'accumulateur est en processus de charge.

Par électrode négative, on entend, classiquement, dans ce qui précède et ce qui suit, l'électrode qui fait office d'anode, quand l'accumulateur débite du courant (c'est-à-dire lorsqu'il est en processus de décharge) et qui fait office de cathode, lorsque l'accumulateur est en processus de charge.

Par soufre élémentaire, on entend l'élément soufre non combiné avec un ou plusieurs éléments chimiques.

Par composé lithié, on entend un composé comprenant l'élément lithium combiné avec un ou plusieurs éléments chimiques.

L'innovation de l'invention réside, entre autres, dans la conception d'un accumulateur à architecture bipolaire comprenant, au niveau des électrodes négatives constitutives des cellules électrochimiques du soufre élémentaire (cet élément étant plus communément utilisé pour entrer dans la constitution d'électrode positive) de sorte à bénéficier des avantages inhérents à l'utilisation du soufre élémentaire et d'avoir associé le soufre élémentaire présent dans l'électrode négative à un composé lithié présent dans l'électrode positive, la réaction électrochimique globale lors de la décharge de l'accumulateur (et également lors de la charge de l'accumulateur) ne formant pas de lithium métallique, pouvant se matérialiser sous l'aspect de dendrites de lithium métallique gênantes pour la sécurité de l'accumulateur.

En particulier, l'utilisation du soufre élémentaire permet d'obtenir un accumulateur présentant une capacité massique importante (la capacité spécifique du soufre étant de 1675 mAh.g⁻¹).

Dans l'électrode négative, le soufre élémentaire peut être adjoint à d'autres éléments, tels que du carbone sous différentes formes. Ainsi, le matériau constitutif de l'électrode négative peut être un matériau composite comprenant du soufre élémentaire et du carbone.

Qui plus est, la tension globale de l'accumulateur peut être adaptée à l'application visée en jouant sur le nombre de cellules électrochimiques constitutives de l'accumulateur, tout en maintenant une compacité intéressante pour les applications portables grâce à l'architecture bipolaire.

Les composés lithinés entrant dans la constitution des électrodes positives des accumulateurs de l'invention sont des composés lithiés polyanioniques de métaux de transition, des oxydes lithiés de métaux de transition et les mélanges de ceux-ci.

Comme exemples de composés lithiés polyanioniques de métaux de transition, on peut citer les composés lithiés répondant à la formule générale suivante :

LiₓM_{y}(XO_{z})ₙ

dans laquelle :
*M représente un élément choisi parmi Mn, Fe, Co, Ni, Cu, Mg, Zn, V, Ti, Al, Si, B, Cr, Mo et les mélanges de ceux-ci ;
*X représente un élément choisi parmi P, Si, Ge, S, V et As ;
*x, y, z et n sont des nombres entiers ou nombres décimaux positifs choisis de telle sorte que la charge totale des cations compense la charge totale des anions, de sorte à ce que le composé soit électriquement neutre.

De préférence, M représente un élément choisi parmi Mn, Fe, Co, Ni, Cu, V, Ti, B, Cr, Mo et les mélanges de ceux-ci.

Plus précisément, de tels composés peuvent correspondre au cas où X correspond à l'élément phosphore P, auquel cas ces composés constituent des composés phosphates de lithium. De tels composés peuvent être, par exemple, LiFePO₄ ou Li₃V₂(PO₄)₃.

Comme exemples de composés oxydes lithiés de métaux de transition, on peut citer les composés de formule suivante :

LiMO₂

dans laquelle M est un élément choisi parmi Ni, Co, Mn, Al et les mélanges de ceux-ci.

A titre d'exemples de tels oxydes, on peut citer les oxydes lithiés LiCoO₂, LiNiO₂ et les oxydes mixtes Li(Ni,Co,Mn)O₂ (tel que Li(Ni_{1/3}Mn_{1/3}Co_{1/3})O₂) connu également sous la dénomination NMC), Li(Ni,Co,Al)O₂ (tel que Li(Ni_{0,8}Co_{0,15}Al_{0,05})O₂ connu également sous la dénomination NCA) ou Li(Ni,Co,Mn,Al)O₂.

En particulier, les oxydes Li(Ni_{0,8}Co_{0,15}Al_{0,05})O₂ et Li(Ni_{1/3}Mn_{1/3}Co_{1/3})O₂ permettent d'atteindre des performances électrochimiques similaires ou sensiblement plus élevées que les oxydes du type LiMO₂ (avec M représentant un seul métal et non un mélange) pour un coût inférieur ou égal et une stabilité chimique améliorée en particulier à l'état chargé.

On peut citer, également, comme exemples d'oxydes lithiés, des oxydes lithiés comprenant du manganèse et/ou de l'aluminium.

Plus précisément, il peut s'agir d'oxydes répondant à la formule suivante :

Li₁₋ₐNi_{0,5-b}Mn_{1,5-c}O_{4-d}

avec a, b, c et d étant compris entre -0,1 et +0,1, c'est-à-dire que chacun des paramètres a, b, c et d est supérieur ou égal à -0,1 et inférieur ou égal à +0,1.

En particulier, un oxyde lithié conforme à cette définition et particulièrement avantageux est l'oxyde de formule LiNi_{0,5}Mn_{1,5}O₄, qui présente la particularité de présenter un potentiel d'insertion/désinsertion du lithium de l'ordre de 4,7 V (ce potentiel étant exprimé par rapport au couple de référence Li+/Li).

On peut citer également comme oxydes lithiés comprenant du manganèse les oxydes lithiés de formules LiMn₂O₄ ou LiNiMnO₄.

Avantageusement, l'électrode positive comprend du LiFePO₄, ce matériau étant, notamment intrinsèquement sûr, du fait de sa stabilité thermique et électrochimique. Qui plus est, ce matériau n'est pas toxique et est peu onéreux, sa synthèse pouvant être réalisée à partir de matières premières bon marché et abondantes.

Comme mentionné ci-dessus, le substrat collecteur de courant supporte sur une première face une électrode de ladite première cellule électrochimique et, sur une deuxième face opposée à ladite première face une électrode de ladite deuxième cellule électrochimique, ce qui signifie, en d'autres termes que le substrat collecteur de courant supporte sur une première face une électrode positive de ladite première cellule électrochimique et sur une deuxième face opposée à ladite première face une électrode négative de ladite deuxième cellule électrochimique ou vice versa.

Dans le cas de figure des accumulateurs de l'invention, il est nécessaire ainsi que le matériau constitutif du substrat collecteur de courant soit stable à la fois vis-à-vis du soufre élémentaire entrant dans la composition de l'électrode négative et du composé lithié entrant dans la composition de l'électrode positive.

Un substrat collecteur de courant conforme à l'invention et répondant aux conditions de stabilité susmentionnées est avantageusement un substrat en aluminium et/ou alliage d'aluminium.

Grâce au couple d'électrodes constitutifs des cellules électrochimiques des accumulateurs de l'invention, il n'est pas nécessaire de recourir à des substrats collecteurs de courant de structure complexe, tel que cela peut être le cas des accumulateurs à architecture bipolaire de l'art antérieur, où, pour des raisons de stabilité vis-à-vis des matériaux d'électrode, le substrat collecteur de courant présente une structure biface, où chaque face est constituée d'un matériau distinct de l'autre face.

Qui plus est, il n'est pas nécessaire de recourir à des substrats en d'autres éléments métalliques, tels que les substrats en cuivre classiquement utilisés.

La possibilité d'utiliser de l'aluminium ou un alliage d'aluminium pour constituer les substrats collecteurs de courant présente l'avantage de permettre l'obtention d'accumulateurs au lithium présentant une densité d'énergie massique importante, du fait notamment de la faible densité de l'aluminium (qui peut être évaluée à 2,699 g/cm³).

Quant à l'électrolyte présent entre l'électrode positive et l'électrode négative de chaque cellule électrochimique, il est, de préférence, un électrolyte liquide comprenant un sel de lithium.

Ainsi, par exemple, l'électrolyte liquide peut comporter un solvant ou mélange de solvants du type carbonate, tels que le carbonate d'éthylène, le carbonate de propylène, le diméthyl carbonate ou le diéthyl carbonate, et/ou un solvant ou mélange de solvants du type éther, tel que le diméthoxyéthane, le dioxolane, le dioxane, le tétraéthylèneglycoldiméthyléther (connu sous l'abréviation TEGDME) et les mélanges de ceux-ci dans lequel est dissous un sel de lithium.

A titre d'exemples, le sel de lithium peut être choisi dans le groupe constitué par LiPF₆, LiClO₄, LiBF₄, LiAsF₆, LiCF₃SO₃, LiN(CF₃SO₂)₃, LiN(C₂F₅SO₂), le bistrifluorométhylsulfonylimide de lithium (connu sous l'abréviation LiTFSI) LiN[SO₂CF₃]₂ et les mélanges de ceux-ci.

L'électrolyte liquide susmentionné peut être amené, dans les cellules électrochimiques des accumulateurs de l'invention, à imprégner un séparateur, lequel est disposé entre l'électrode positive et l'électrode négative de la cellule électrochimique.

Ce séparateur peut être en un matériau poreux, tel qu'un matériau polymérique, apte à accueillir dans sa porosité l'électrolyte liquide.

L'électrolyte peut être également un électrolyte solide, tel qu'un électrolyte polymérique comprenant un sel de lithium.

A titre d'exemple, le polymère peut comprendre du poly(acrylonitrile), du poly(oxyde d'éthylène), du poly(fluorure de vinylidène), un copolymère de fluorure de vinylidène-hexafluoropropylène ou un autre polymère rendu conducteur ionique par gélification en présence d'un électrolyte liquide. Le sel de lithium peut répondre à la même définition que celle donnée précédemment.

Un accumulateur spécifique conforme à l'invention est un accumulateur pour lequel, pour chaque cellule, l'électrode positive comprend du LiFePO₄, l'électrode négative comprend du soufre élémentaire.

L'utilisation de ce couple d'électrodes pour entrer dans la constitution des cellules électrochimiques des accumulateurs de l'invention est particulièrement avantageuse, car, que ce soit pour le soufre élémentaire ou pour LiFePO₄, ces deux matériaux sont intrinsèquement sûrs et sont également peu onéreux, ce qui peut s'avérer très intéressant pour le développement de véhicules électriques, qui requièrent des accumulateurs fiables et bon marché.

Lorsque la première cellule et/ou la deuxième cellule est située à l'extrémité de l'accumulateur (c'est-à-dire qu'elle constitue la cellule située à l'extrémité de l'empilement), cette première et/ou deuxième cellule contient, outre une électrode déposée sur une face d'un substrat collecteur de courant dont la face opposée est occupée par une électrode de signe opposé de la cellule adjacente, une électrode de signe opposé déposée sur une première face d'un substrat collecteur de courant, la face opposée à ladite première face n'étant pas occupée par une électrode d'une cellule adjacente, compte tenu que ladite première cellule et/ou la deuxième cellule constitue la dernière cellule de l'empilement. Le substrat collecteur de courant dont une seule face est occupée par une électrode peut être également avantageusement en aluminium ou alliage d'aluminium.

Les accumulateurs conformes à l'invention sont particulièrement adaptés à des produits nécessitant des architectures d'intégration compactes (tels que dans les systèmes embarqués, les systèmes autonomes), où une énergie importante est requise. Ce type d'exigences peut se rencontrer dans les domaines des produits nécessitant une alimentation autonome, ce qui est le cas des domaines de l'informatique, de la vidéo, de la téléphonie, des transports tels que les véhicules électriques, les véhicules hybrides, ou encore des domaines médicaux, spatiaux, de la microélectronique.

L'invention va, à présent, être décrite en référence au mode de réalisation particulier défini ci-dessous en référence aux figures annexées.

### BRÈVE DESCRIPTION DES DESSINS

La figure unique représente un accumulateur conforme à l'invention selon un mode de réalisation particulier.

### EXPOSÉ DÉTAILLÉ DE MODES DE RÉALISATION PARTICULIERS

L'exemple présenté ci-dessous illustre la préparation d'un accumulateur conforme à l'invention représenté sur la figure unique en annexe, cet accumulateur étant composé d'un empilement d'une première cellule électrochimique et d'une deuxième cellule électrochimique séparées par un substrat collecteur de courant en aluminium dit « bipolaire », chaque cellule comprenant respectivement une électrode négative comprenant du soufre élémentaire et une électrode positive comprenant du LiFePO₄ séparées par un électrolyte comprenant un sel bistriméthylsulfonylimide de lithium dans un mélange de deux solvants éthers.

### 1) Réalisation de l'électrode positive dite « électrode positive périphérique »

Une électrode positive de composition suivante :
*80% en masse de LiFePO₄ ;
*10% en masse de noir de carbone super P ;
*10% en masse de polyfluorure de vinylidène (PVDF)
est préparée selon le protocole suivant :
- pesée des poudres de LiFePO₄ et de noir de carbone séparément ;
- préparation d'une solution de N-méthylpyrrolidone (NMP) comprenant le PVDF ;
- ajout progressif dans ladite solution des poudres susmentionnées tout en procédant à un mélange par agitation mécanique ;
- après obtention d'un mélange homogène, enduction à l'aide d'une racle micrométrique d'une face d'un feuillard aluminium de 20 µm d'épaisseur par ledit mélange de sorte à obtenir une couche présentant une épaisseur de 200 µm ;
- premier séchage de la couche ainsi déposée dans une étuve à 55°C pendant 24 heures, de sorte à obtenir l'évaporation de la NMP ;
- second séchage de la couche à 80°C pendant 48 heures, pour éliminer toutes traces d'eau résiduelle, moyennant quoi la couche résultante constitue l'électrode positive.

### 2) Réalisation de l'électrode négative dite « électrode négative périphérique ».

Une électrode négative de composition suivante :
*80% en masse de soufre élémentaire;
*10% en masse de noir de carbone super P ;
*10% en masse de polyfluorure de vinylidène (PVDF)
est préparée selon le protocole suivant :
- pesée des poudres de soufre élémentaire et de noir de carbone séparément ;
- préparation d'une solution de N-méthylpyrrolidone (NMP) comprenant le PVDF ;
- ajout progressif dans ladite solution des poudres susmentionnées tout en procédant à un mélange par agitation mécanique ;
- après obtention d'un mélange homogène, enduction à l'aide d'une racle micrométrique d'une face d'un feuillard en aluminium de 20 µm d'épaisseur par ledit mélange de sorte à obtenir une couche présentant une épaisseur de 100 µm;
- premier séchage de la couche ainsi déposée dans une étuve à 55°C pendant 24 heures, de sorte à obtenir l'évaporation de la NMP ;
- second séchage de la couche à 50°C pendant 48 heures, pour éliminer toutes traces d'eau résiduelle, moyennant quoi la couche résultante constitue l'électrode négative.

### 3) Réalisation du substrat dit « substrat bipolaire »

Le substrat bipolaire est réalisé en mettant en oeuvre le protocole opératoire exposé au paragraphe 1) ci-dessus sur une première face d'un feuillard en aluminium de 20 µm d'épaisseur et le protocole opératoire exposé au paragraphe 2) ci-dessus sur une deuxième face du même feuillard, cette deuxième face étant opposée à ladite première face.

### 4) Réalisation de l'empilement

Après découpe au format choisi, les électrodes préparées selon les protocoles exposés aux paragraphes 1 et 2 et le substrat bipolaire préparé selon le protocole exposé au paragraphe 3 sont comprimées séparément à 2 t/cm² à température ambiante.

L'accumulateur représenté sur la figure unique est réalisé en deux étapes.

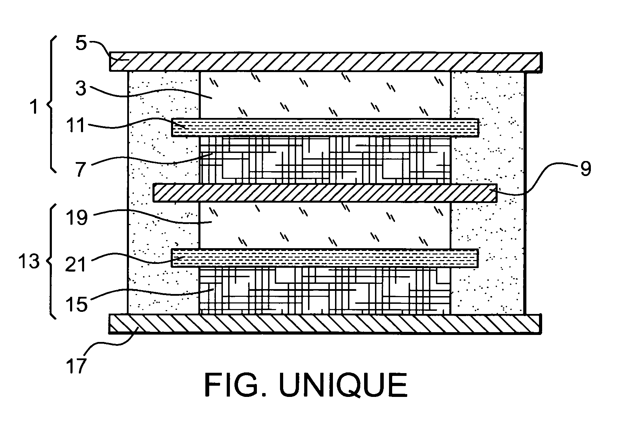

Une première étape, réalisée en atmosphère non contrôlée, consiste à placer selon une configuration conforme à celle représentée sur la figure 1 l'électrode positive périphérique, le substrat bipolaire et l'électrode négative périphérique dans deux joints en polyéthylène en forme de U, laissant une face du générateur ouverte, suivie d'une étape de compression à chaud de l'ensemble de sorte à assurer l'étanchéité de l'accumulateur.

Une deuxième étape, réalisée en atmosphère inerte, consiste à introduire, par la face ouverte, dans les deux cellules entre l'électrode positive et l'électrode négative un séparateur en polypropylène/polyéthylène imbibé d'un électrolyte liquide à base de bistriméthylsulfonylimide de lithium LiTFSI (1 mol.L⁻¹) en solution dans un mélange 50/50 en volume de tétraéthylèneglycoldiméthyléther (TEGDME)/dioxolane.

La face ouverte est ensuite fermée au moyen de deux autres joints en polyéthylène.

A l'issue de ces différentes étapes, l'on obtient, conformément à ce qui est représenté sur la figure unique, un accumulateur électrochimique au lithium comprenant :
- une première cellule électrochimique 1 comprenant une électrode positive périphérique 3 comprenant du LiFePO₄ déposée sur un substrat conducteur en aluminium 5 et, en vis-à-vis, une électrode négative 7 comprenant du soufre élémentaire déposée sur une première face d'un substrat conducteur en aluminium 9, ladite électrode négative et ladite électrode positive étant séparées l'une de l'autre par un séparateur 11 imbibé d'un électrolyte tel que défini ci-dessus ; et
- une deuxième cellule électrochimique 13 comprenant une électrode négative périphérique 15 comprenant du soufre élémentaire déposée sur un substrat conducteur en aluminium 17 et, en vis-à-vis, une électrode positive 19 comprenant du LiFePO₄ déposée sur une deuxième face dudit substrat conducteur en aluminium 9, ladite deuxième face étant opposée à ladite première face, ladite électrode négative et ladite électrode positive étant séparées l'une de l'autre par un séparateur 21 imbibé d'un électrolyte tel que défini ci-dessus.

## Revendications

1. Accumulateur électrochimique au lithium comprenant au moins une première cellule électrochimique et au moins une deuxième cellule électrochimique séparées l'une de l'autre par un substrat collecteur de courant, lequel substrat supporte sur une première face une électrode de ladite première cellule électrochimique et sur une deuxième face opposée à ladite première face une électrode de signe opposé de ladite deuxième cellule électrochimique, chaque cellule comprenant une électrode positive et une électrode négative séparées par un électrolyte, **caractérisé en ce que** l'électrode positive comprend un composé lithié choisi parmi les composés lithiés polyanioniques de métaux de transition, les oxydes lithiés de métaux de transition et les mélanges de ceux-ci et l'électrode négative comprend du soufre élémentaire.

2. Accumulateur selon la revendication 1, dans lequel les composés lithiés polyanioniques de métaux de transition répondent à la formule générale suivante :
LiₓM_{y}(XO_{z})ₙ
dans laquelle :
*M représente un élément choisi parmi Mn, Fe, Co, Ni, Cu, Mg, Zn, V, Ti, Al, Si, B, Cr, Mo et les mélanges de ceux-ci ;
*X représente un élément choisi parmi P, Si, Ge, S, V et As ;
*x, y, z et n sont des nombres entiers ou décimaux positifs choisis de telle sorte que la charge totale des cations compense la charge totale des anions, de sorte à ce que le composé soit électriquement neutre.

3. Accumulateur selon la revendication 2, dans lequel les composés lithiés polyanioniques sont LiFePO₄ ou Li₃V₂(PO₄)₃.

4. Accumulateur selon la revendication 1, dans lequel les composés oxydes lithiés sont des composés répondant à la formule suivante :
LiMO₂
dans laquelle M est un élément choisi parmi Ni, Co, Mn, Al et les mélanges de ceux-ci.

5. Accumulateur selon la revendication 1, dans lequel les composés oxydes lithiés sont des oxydes lithiés comprenant du manganèse et/ou de l'aluminium.

6. Accumulateur selon la revendication 5, dans lequel les composés oxydes lithiés comprenant du manganèse répondant à la formule suivante :
Li₁₋ₐNi_{0,5-b}Mn_{1,5-c}O_{4-d}
avec a, b, c et d étant compris entre -0,1 et +0,1, c'est-à-dire que chacun des paramètres a, b, c et d est supérieur ou égal à -0,1 et inférieur ou égal à +0,1.

7. Accumulateur selon l'une quelconque des revendications 1 à 3, dans lequel l'électrode positive comprend du LiFePO₄.

8. Accumulateur selon l'une quelconque des revendications précédentes, dans lequel le substrat collecteur de courant est en aluminium ou en alliage d'aluminium.

9. Accumulateur selon l'une quelconque des revendications précédentes, dans lequel l'électrolyte est un électrolyte liquide comprenant un sel de lithium.

10. Accumulateur selon la revendication 9, dans lequel le sel de lithium est choisi parmi LiPF₆, LiClO₄, LiBF₄, LiAsF₆, LiCF₃SO₃, LiN(CF₃SO₂)₃, LiN(C₂F₅SO₂), le bistrifluorométhylsulfonylimide de lithium LiN[SO₂CF₃]₂ et les mélanges de ceux-ci.

11. Accumulateur selon la revendication 9 ou 10, dans lequel l'électrolyte comprend un ou plusieurs solvants de la famille des carbonates et/ou de la famille des éthers.

## Patentansprüche

1. Elektrochemischer Lithium-Akkumulator, welcher mindestens eine erste elektrochemische Zelle und mindestens eine zweite elektrochemische Zelle aufweist, welche mittels eines Stromkollektor-Substrats voneinander getrennt sind, wobei das Substrat auf einer ersten Fläche eine Elektrode der ersten elektrochemischen Zelle trägt und auf einer zweiten Fläche, welche der ersten Fläche gegenüberliegt, eine Elektrode mit entgegengesetztem Vorzeichen zu der zweiten elektrochemischen Zelle trägt, wobei jede Zelle eine positive Elektrode und eine negative Elektrode aufweist, welche durch einen Elektrolyten voneinander getrennt sind, **dadurch gekennzeichnet, dass** die positive Elektrode eine Lithium-Verbindung aufweist, welche aus polyanionischen Lithium-Verbindungen von Übergangsmetallen, aus lithiumhaltigen Oxiden von Übergangsmetallen, und aus Gemischen davon ausgewählt wird, und dass die negative Elektrode elementaren Schwefel aufweist.

2. Akkumulator nach Anspruch 1, in welchem die polyanionischen Lithium-Verbindungen von Übergangsmetallen der folgenden allgemeinen Formel
LiₓM_{y}(XO_{z})ₙ
entsprechen, in welcher:
*M ein Element darstellt, welches aus Mn, Fe, Co, Ni, Cu, Mg, Zn, V, Ti, Al, Si, B, Cr, Mo und den Gemischen daraus ausgewählt wird;
*X ein Element darstellt, welches aus P, Si, Ge, S, V und As ausgewählt wird;
*x, y, z und n ganze Zahlen oder positive Dezimalzahlen sind, welche so gewählt sind, dass die Gesamtladung von Kationen die Gesamtladung von Anionen kompensiert, so dass die Verbindung elektrisch neutral ist.

3. Akkumulator nach Anspruch 2, in welchem die polyanionischen Lithium-Verbindungen LiFePO₄ oder Li₃V₂(PO₄)₃ sind.

4. Akkumulator nach Anspruch 1, in welchem die Lithium-Oxidverbindungen Verbindungen sind, welche der folgenden Formel
LiMO₂
entsprechen, in welcher M ein Element ist, welches aus Ni, Co, Mn, Al und den Gemischen daraus ausgewählt wird.

5. Akkumulator nach Anspruch 1, in welchem die Lithium-Oxidverbindungen Lithium-Oxide sind, welche Mangan und/oder Aluminium aufweisen.

6. Akkumulator nach Anspruch 5, in welchem die Lithium-Oxidverbindungen Mangan aufweisen und der folgenden Formel entsprechen:
Li₁₋ₐNi_{0,5-b}Mn_{1,5-c}O_{4-d}
wobei a, b, c und d zwischen -0,1 und +0,1 liegen, d.h. jeder Parameter a, b, c und d größer oder gleich -0,1 und kleiner oder gleich +0,1 ist.

7. Akkumulator nach einem der Ansprüche 1 bis 3, in welchem die positive Elektrode LiFePO₄ aufweist.

8. Akkumulator nach einem der vorhergehenden Ansprüche, in welchem das Stromkollektor-Substrat aus Aluminium oder einer Aluminiumlegierung besteht.

9. Akkumulataor nach einem der vorhergehenden Ansprüche, in welchem der Elektrolyt ein flüssiger Elektrolyt ist, welcher ein Lithiumsalz aufweist.

10. Akkumulator nach Anspruch 9, in welchem das Lithiumsalz aus LiPF₆, LiClO₄, LiBF₄, LiAsF₆, LiCF₃SO₃, LiN(CF₃SO₂)₃, LiN(C₂F₅SO₂), dem Bis-Trifluoromethylsulfonyl-Imid von Lithium LiN[SO₂CF₃]₂ und den Gemischen daraus ausgewählt wird.

11. Akkumulator nach Anspruch 9 oder 10, **dadurch gekennzeichnet, dass** der Elektrolyt ein oder mehrere Lösungsmittel aus der Familie der Karbonate und/oder aus der Familie der Ether aufweist.

## Claims

1. An electrochemical lithium accumulator comprising at least one first electrochemical cell and at least one second electrochemical cell separated from each other by a current collector substrate, which substrate supports on a first face, an electrode of said first electrochemical cell and on a second face opposite to said first face, an electrode of opposite sign of said second electrochemical cell, each cell comprising a positive electrode and a negative electrode separated by an electrolyte **characterized in that** the positive electrode comprises a lithiated compound selected from polyanionic lithiated metal transition compounds, lithiated transition metal oxides and mixtures thereof and the negative electrode comprises elemental sulfur.

2. The accumulator according to claim 1, wherein the polyanionic lithiated transition metal compounds fit the following general formula:
LiₓM_{y}(XO_{z})ₙ
wherein:
*M represents an element selected from Mn, Fe, Co, Ni, Cu, Mg, Zn, V, Ti, Al, Si, B, Cr, Mo and mixtures thereof;
*X represents an element selected from P, Si, Ge, S, V and As;
*x, y, z and n are integers or positive decimal numbers selected so that the total charge of the cations compensates for the total charge of the anions, so that the compound is electrically neutral.

3. The accumulator according to claim 2, wherein the polyanionic lithiated compounds are LiFePO₄ or Li₃V₂(PO₄)₃.

4. The accumulator according to claim 1, wherein the lithiated oxide compounds are compounds fitting the following formula:
LiMO₂
wherein M is an element selected from Ni, Co, Mn, Al and mixtures thereof.

5. The accumulator according to claim 1, wherein the lithiated oxide compounds are lithiated oxides comprising manganese and/or aluminium.

6. The accumulator according to claim 5, wherein the lithiated oxide compounds comprising manganese fit the following formula:
Li₁₋ₐNi_{0.5-b}Mn_{1.5-c}O_{4-d}
with a, b, c and d being comprised between -0.1 and +0.1, i.e. each of the parameters a, b, c and d is greater than or equal to -0.1 and less than or equal to +0.1.

7. The accumulator according to one of claims 1 to 3, wherein the positive electrode comprises LiFePO₄.

8. The accumulator according to any of the preceding claims, wherein the current collector substrate is in aluminium or an aluminium alloy.

9. The accumulator according to any of the preceding claims, wherein the electrolyte is a liquid electrolyte comprising a lithium salt.

10. The accumulator according to claim 9, wherein the lithium salt is selected from LiPF₆, LiClO₄, LiBF₄, LiAsF₆, LiCF₃SO₃, LiN(CF₃SO₂)₃, LiN(C₂F₅SO₂), lithium bistrifluoromethylsulfonylimide LiN[SO₃CF₃]₂ and mixtures thereof.

11. The accumulator according to claim 9 or 10, wherein the electrolyte comprises one or several solvents from the family of carbonates and/or from the family of ethers.
